# EUROPEAN PATENT APPLICATION

(11) **EP 1 236 701 A1**
(43) Date of publication of application: **04.09.2002**
(21) Application number: 01400405.5
(22) Date of filing: 15.02.2001
(51) Int. Cl.: C04B 28/04

(54) **Very low-density cement slurry**

(71) Applicant: Schlumberger Technology B.V., 2514 JG Den Haag (NL); SERVICES PETROLIERS SCHLUMBERGER, 75007 Paris (FR); SCHLUMBERGER HOLDINGS LIMITED, Road Town, Tortola (VG)
(72) Inventor: Drochon, Bruno, 93160 Noisy Le Grand (FR); Kefi, Slaheddine, 75017 Paris (FR)
(74) Representative: Hyden, Martin Douglas

(57) **Abstract**

A cement slurry having a density between 750 kg/m³ and 1,000 kg/m³, comprising a solid fraction comprising: either
75% - 90% (by volume) of lightweight particles having a mean particle size between 10 and 60 µm;
10% - 25% (by volume) of Portland cement having a mean particle size of between 10 and 50 µm, or micro-cement having a mean particle size between 0.5 and 5 µm;
or:
20% - 50% (by volume) of lightweight particles having a mean particle size between 10 and 60 µm;
10% - 25% (by volume) of Portland cement having a mean particle size of between 10 and 50 µm, or micro-cement having a mean particle size between 0.5 and 5 µm;
35% - 65% (by volume) of lightweight particles having a mean particle size between 100 and 200 µm; and
a liquid fraction present in an amount of 37% - 50% (by volume) of the total volume. Such cements have remarkable mechanical properties due to their very low porosity in spite of having very low density.

## Description

The present invention relates to cement slurries for use in oil wells, gas wells, water wells, geothermal wells, and the like. More precisely, the invention relates to such cement slurries having low density and low porosity.

After a well such as an oil well has been drilled, casing is typically lowered into the well and is cemented over all or part of its height. This serves in particular to eliminate any fluid interchange between the various formation layers through which the well extends, for example preventing gas from rising via the annulus surrounding the casing, or limiting ingress of water into a hydrocarbon-producing well. Another objective of cementing is to consolidate the well and to protect the casing.

While it is being prepared and then injected into the well and placed in the zone that is to be cemented, a cement slurry must present relatively low viscosity and have effectively constant rheological properties. Once it is in place, an ideal cement rapidly develops high compressive strength.

It is desirable to adjust the density of the cement such that the pressure exerted by the cement on the formation at the bottom of the well compensates at least for the formation pore fluid pressure so as to avoid any risk of influxes. The upper limit of hydrostatic pressure generated by the column of cement plus the head losses due to the circulation of the fluids being pumped must remain below the fracturing pressure of the rocks in the section being cemented. Certain geological formations are very fragile and require densities lower to that of water to avoid such fracturing.

Since the risk of influx diminishes with column height, the density required for compensating pore pressure can be lower if a large column height is used. Furthermore, cementing over a large height is advantageous since that makes it possible to reduce the number of sections that must be cemented.

All of these factors favor the use of cement slurries of low density.

Cement slurries in the most widespread use for oil and gas wells have densities of about 1900 kg/m³, about twice the density desired to avoid fracturing certain deposits. To produce lighter (less dense) slurries, the simplest known technique is to produce an extended slurry in which the quantity of water is increased compared to a normal slurry while adding stabilizing additives (known as "extenders") to the slurry for the purpose of avoiding settling of particulate materials and/or formation of free water at the surface of the slurry. Such a technique, however, cannot be used to produce a slurry with a density close to 1000 kg/m³. Furthermore, hardened cements formed from such slurries have greatly reduced compressive strength, a high degree of permeability, and poor adhesive capacity. For these reasons, the technique cannot be used to produce slurries effectively below densities of about 1300 kg/m³ while still retaining good zonal isolation and providing sufficient reinforcement for the casing.

Another known technique consists in lightening the cement slurry by injecting gas (generally air or nitrogen) into the slurry before it sets to create a foam. The quantity of air or nitrogen added is adjusted to reach the required slurry density. This technique provides performance that is a little better than extended slurries described above since the density of gas is lower than that of water, so less needs to be added. Nevertheless, in oil industry applications, densities remain limited in practice to greater than 1100 kg/m³, even when starting with slurries that have already been lightened with water. Above a certain "quality of foam", i.e. a certain ratio of gas volume to volume of the foamed slurry, the stability of the foam falls off rapidly, the compression strength of the set cement becomes too low, and its permeability becomes too high, thereby compromising durability, especially in a hot aqueous medium which includes ions that are aggressive to a greater or lesser extent for cement as is commonly found in oil or gas wells.

It has been previously proposed to incorporate glass or ceramic beads or spheres into cement slurries for various reasons. US 5,571,318 proposes including ceramic beads in a cement slurry for fluid loss control. US 3,804,058 proposes the use of glass microspheres in size ranges of 60 - 325 micron and <40 - >250 micron to produce low density slurries. WO 00/29359 proposes the use of cenospheres of mean particle size in the 120 - 150 micron range for use in slurries for low temperature or deep water wells. None of these proposals describes slurries having a density less than water.

International Patent Application No. PCT/EP00/06459 discloses a low density slurry having a density lying in the range 0.9 g/cm³ to 1.3 g/cm³, and being constituted by a solid fraction and a liquid fraction, having porosity (volume ratio of liquid fraction over solid fraction) lying in the range 38% to 50%, said solid fraction comprising : 60% to 90% (by volume) of lightweight particles having a mean size lying in the range 20 microns (µm) to 350 µm; 10% to 30% (by volume) of micro-cement having a mean particle diameter lying in the range 0.5 µm to 5 µm; 0 to 20% (by volume) of Portland cement, having particles with a mean diameter lying in the range 20 µm to 50 µm; and 0 to 30% (by volume) of gypsum.

An object of the present invention is to provide cement slurries having both low density and low porosity, and that are obtained without introducing gas.

The present invention provides a cement slurry having a density between 750 kg/m³ and 1000 kg/m³, comprising a liquid fraction present in an amount of 37% - 50% (by volume) of the total volume, and a solid fraction comprising a cement component and a lightweight particle component including particles having a mean particle size between 10 and 60 µm.

The solid fraction can be present as either a bimodal mixture or a trimodal mixture. In bimodal form, the solids fraction comprises:
75% - 90% (by volume) of lightweight particles having a mean particle size between 10 and 60 µm;
10% - 25% (by volume) of Portland cement having a mean particle size of between 10 and 50 µm, or micro-cement having a mean particle size between 0.5 and 5 µm.

In trimodal form, the solids fraction comprises:
20% - 50% (by volume) of lightweight particles having a mean particle size between 10 and 60 µm;
10% - 25% (by volume) of Portland cement having a mean particle size of between 10 and 50 µm, or micro-cement having a mean particle size between 0.5 and 5 µm;
35% - 65% (by volume) of lightweight particles having a mean particle size between 100 and 200 µm.

The lightweight particles having a mean particle size between 10 and 60 µm are preferably glass micro-spheres having a density of less than 500 kg/m³, for example 380 kg/m³. A particularly preferred material has a mean particle size higher than 25 µm.

Low porosities are achieved by the use of a ratio of the liquid phase to the solid phase of less than 50%, preferably less than 45% to optimise mechanical properties and permeability. By providing mechanical properties that are much better than those of conventional lightened systems, and permeabilities that are lower, the leakproofing and adhesion properties of ultralightweight cement and the resistance of such formulations to chemical attack are thus much better than with the systems presently in use for low densities, even though the invention makes it possible to reach densities that are exceptionally low, and in particular that are significantly lower than the density of water. In addition, slurries of the invention do not require the use of gas, thus making it possible to avoid the logistical problems that would otherwise be required for manufacturing foamed cements.

The method of the invention is characterized in that particulate additives are incorporated in the cement slurry, such that in combination with one another and with the other particulate components of the slurry, and in particular with the particles of cement, micro-cement (or comparable hydraulic binder), they give rise to a grain-size distribution that significantly alters the properties of the slurry. The particulate additives can be organic or inorganic and are particularly selected for their low density.

The low density is obtained by combining lightweight particles and cement (or a comparable hydraulic binder). Suitable rheological and mechanical properties are obtained by selecting the size and the volume distribution of the particles in such a manner as to maximize the compactness of the solid mixture.

For a solid mixture having two components (the lightweight particles and the cement/micro-cement), this maximum compactness is generally obtained for a volume ratio of lightweight particles to cement lying in the range 70:30 to 85:15, and preferably in the range 75:25 to 80:20, when using a micro-cement and lightweight particles selected to be of a size that is at least 10 times the size of the particles of micro-cement. These values can vary, particularly depending on the dispersion of the grain-size distribution of the lightweight particles. Particles having a mean size of 30 microns can be used with a micro-cement in a ratio (by volume) of about 85:15 which permits densities of the order of 850 to 880 kg/m³ to be obtained (depending on the ratio of liquid to solid).

The term "micro-cement" is used in the invention to designate any hydraulic binder made up of particles of mean size of about 3 µm and including no, or at least no significant number of, particles of size greater than 15 µm. Such materials have a specific surface area per unit weight as determined by the air permeability test that is generally about 0.8 m²/g.

The micro-cement can essentially be constituted by Portland cement, in particular a class G Portland cement typically comprising about 65% lime, 22% silica, 4% alumina, 4% iron oxides, and less than 1% manganese oxide, or equally well by a mixture of Portland micro-cement with microslag, i.e. a mixture making use essentially of compositions made from clinker comprising 45% lime, 30% silica, 10% alumina, 1% iron oxides and 5% to 6% manganese oxide (only the principal oxides are mentioned here; and these concentrations can naturally vary slightly as a function of the supplier). For very low temperature applications (< 30°C), Portland micro-cement is preferable over a mixture of micro-cement and slag because of its reactivity.

The lightweight particles typically have density of less than 1 g/cm³, and generally less than 0.7 g/cm³. It is possible to use synthetic materials such as hollow glass beads, and more particularly preferred are beads of sodium-calcium-borosilicate glass presenting high compression strength or indeed microspheres of a ceramic, e.g. of the silica-alumina type. These lightweight particles can also be particles of a plastics material such as beads of polypropylene. It is also possible to use hollow microspheres, in particular of silico-aluminate, known as cenospheres, a residue that is obtained from burning coal and having a mean diameter of about 150 µm.

In general, the density of the slurry is adjusted essentially as a function of which lightweight particles are chosen, but it is also possible to vary the ratio of water to solid (keeping the water volume fraction in the range 38% to 50%), the quantity of (micro-)cement or of comparable hydraulic binder (in the range 10% to 30%).

Formulations made in accordance with the invention have mechanical properties that are significantly better than those of foamed cements having the same density. Compressive strengths are very high and porosities very low. As a result, permeabilities are smaller by several orders of magnitude than those of same-density foamed cements, thereby conferring remarkable properties of hardness on such systems.

The method of the invention considerably simplifies the cementing operation, since it avoids any need for logistics of the kind required for foaming.

Slurries prepared in accordance with the invention also have the advantage of enabling all of the characteristics of the slurry (rheology, setting time, compression strength, ...) to be determined in advance for the slurry as placed in the well, unlike foamed slurries where certain parameters can be measured on the slurry only prior to the introduction of gas (setting time).

Slurries according to the invention can include one or more additives of the following types: dispersants, antifreeze, water retainers, extenders, cement setting accelerators or retarders, and foam stabilizers. Where such additives are in liquid form (either as provided or dissolved in a liquid carrier) they are considered as part of the liquid fraction. Small amounts of solid material may be present in the slurry without altering its bimodal or trimodal nature as defined above.

The following examples illustrate the invention without limiting its scope.

The properties of two slurries prepared according to the invention are presented and compared to a foamed cement system:
Slurry A: A mixture of powders was prepared. It comprised 90% by volume of glass microspheres having an average size of 30 µm and a density of 380 kg/m³, and 10% by volume of a mixture of Portland micro-cement and slag having a mean size of about 1.5 µm.
   The microspheres used are sold by 3M™ under the name Scotchlite™ Glass Bubbles S38HS; such microspheres have a density of 380 kg/m³ and a grain-size distribution such that 10% of the particles (by volume) have a size of less than 20 µm, 50% less than 45 µm, and 90% less than 75 µm; these particles were selected in particular because of their high compression strength (90% of the particles withstand isostatic compression of 38.5 MPa or 5,500 psi).
   Water and additives (anti-foaming agent at 0.05 gallons per sack of powder, and a super-plasticizer based on polynaphthalene sulfonate at 0.08 gallons per bag of powder) were mixed with this powder so as to ensure that the volume percentage of liquid in the slurry was 42%. It should be observed that a bag of powder is defined by analogy with bags of cement as being a bag containing 45.359 kg of mixture, in other words 1 gps = 0.0834 liters (*l*) of additive per kg of mixture.
Slurry B: A mixture of powders was prepared. It comprised 85% by volume of glass micro-spheres S38HS of mean particle size 30 µm and density of 380 kg/m³, and 15% by volume of a mixture of Portland micro-cement and slag having a mean size of about 1.5 µm.
   Water and additives (anti-foaming agent at 0.05 gallons per sack of powder, and a super-plasticizer based on polynaphthalene sulfonate at 0.12 gallons per bag of powder) were mixed with the powder so that the volume percentage of liquid in the slurry was 42%.
Slurry C: A mixture of powders was prepared. It comprised 45% by volume of hollow cenospheres of mean particle size 150 µm and density of 680 kg/m³, 43% by volume of glass micro-spheres S38HS of mean particle size 30 µm and density of 380 kg/m³, and 12% by volume of a mixture of Portland micro-cement and slag having a mean size of about 1.5 µm.
   Water and additives (anti-foaming agent at 0.05 gallons per sack of powder, and a super-plasticizer based on polynaphthalene sulfonate at 0.1 gallons per bag of powder) were mixed with the powder so that the volume percentage of liquid in the slurry was 42%.
   Slurry D: A conventional slurry of density 1,900 kg/cm³ was prepared based on a class G Portland cement.

The slurry was foamed with a quantity of foam of 50% so as to obtain a slurry whose final density was 950 kg/m³.

| Slurry | A | B | C | D |
|---|---|---|---|---|
| Density | 790 (6.6) | 910 (7.57) | 900 (7.5) | 950 (7.9) |
| Porosity | 42% | 42% | 42% | 78%* |
| PV | 73 | 62 | 68 | |
| Ty | 3 (6) | 2.5 (5) | 3 (6) | |
| Permeability | <5µD | <5µD | <5µD | >10mD |
| CS | 2.8 (410) | 8.2 (1200) | 5.5 (800) | 4.6 (670) |

The densities are expressed in kg/m³ (and in pounds per gallon in parentheses). Rheology is expressed by a flow threshold Ty in Pascals (and in pounds per 100 square feet in parentheses), and by plastic viscosity in mPa.s or centipoise, using the Bingham fluid model. These parameters were determined at ambient temperature. CS means compressive strength after 4 days for cement set at ambient temperature and pressure, and it is expressed in MPa (and in pounds per square inches in parentheses).

* In this case, porosity was calculated as volume of gas + water over total volume of the slurry.

It can be seen that for the slurries prepared in accordance with the invention, compressive strength is particularly high for densities that are so low and that these slurries present excellent rheology in spite of their low porosity.

## Claims

1. A cement slurry having a density between 750 kg/m³ and 1000 kg/m³, comprising a liquid fraction present in an amount of 37% - 50% (by volume) of the total volume, and a solid fraction comprising a cement component and a lightweight particle component including particles having a mean particle size between 10 and 60 µm.

2. A cement slurry as claimed in claim 1, wherein the solid fraction comprises:
75% - 90% (by volume) of lightweight particles having a mean particle size above 15 µm; and
10% - 25% (by volume) of Portland cement having a mean particle size of between 10 and 50 µm, or micro-cement having a mean particle size between 0.5 and 5 µm.

3. A cement slurry as claimed in claim 1, wherein the solid fraction comprises:
20% - 50% (by volume) of lightweight particles having a mean particle size between 10 and 60 µm;
10% - 25% (by volume) of Portland cement having a mean particle size of between 10 and 50 µm, or micro-cement having a mean particle size between 0.5 and 5 µm; and
35% - 65% (by volume) of lightweight particles having a mean particle size between 100 and 200 µm.

4. A cement slurry as claimed in claim 3, wherein the lightweight particles having a mean particle size between 100 and 200 µm have a density not greater than 1,000 kg/m³.

5. A cement slurry as claimed in claim 4, wherein the lightweight particles having a mean particle size between 100 and 200 µm have a density not greater than 700 kg/m³.

6. A cement slurry as claimed in claim 3, 4 or 5, wherein the lightweight particles having a mean particle size between 100 and 200 µm comprise cenospheres.

7. A cement slurry as claimed in any preceding claims, wherein the cement component comprises a micro-cement having a mean particle size not greater than 3 microns.

8. A cement slurry as claimed in claim 7, wherein the solid fraction comprises lightweight particles having a mean particle size that is at least ten times that of the micro-cement.

9. A cement slurry as claimed in any preceding claim wherein the lightweight particles having a mean particle size between 10 and 60 µm have a density of not more than 500 kg/m³.

10. A cement slurry as claimed in claim 9, wherein the lightweight particles having a mean particle size between 10 and 60 µm have a density of about 380 kg/m³.

11. A cement slurry as claimed in any preceding claim, wherein the lightweight particles having a mean particle size between 10 and 60 µm have a grain size distribution such that at least 10% of the particles (by volume) have a size less than about 20 µm, at least 50% of the particles (by volume) have a size less than about 45 µm, and at least 90% of the particles (by volume) have a size less than about 75 µm.

12. A cement slurry as claimed in any preceding claim, wherein the liquid fraction is present in an amount of 45% (by volume) of the total volume.

13. A cement slurry as claimed in any preceding claim, wherein the lightweight particles having a mean particle size between 10 and 60 µm comprise glass microspheres.

14. A cement slurry as claimed in any preceding claim, further comprising one or more additives of the following types: dispersants, antifreeze, water retainers, extenders, cement setting accelerators or retarders, and foam stabilizers.
